# EUROPEAN PATENT APPLICATION

(11) **EP 3 757 548 A1**
(43) Date of publication of application: **30.12.2020**
(21) Application number: 20181558.6
(22) Date of filing: 23.06.2020
(51) Int. Cl.: G01N 21/55, G01N 21/57

(54) **REFLECTION CHARACTERISTIC MEASUREMENT DEVICE, CORRESPONDING METHOD AND NON-TRANSITORY STORAGE MEDIUM**

(30) Priority: 28.06.2019 JP 2019121611
(71) Applicant: CANON KABUSHIKI KAISHA, OHTA-KU Tokyo 146-8501 (JP)
(72) Inventor: KATO, Shigeki, Ohta-ku,, Tokyo 146-8501 (JP)
(74) Representative: TBK

(57) **Abstract**

A measurement device configured to measure reflection characteristic of a test surface (10) includes: an illumination unit (1, 2, 31, 41) configured to illuminate the test surface with light from a light source (1); a detection unit (100, 105; 112,113,114,106) configured to detect reflected light distribution from the test surface illuminated by the illumination unit; and a processing unit (110) configured to obtain information indicating a degree of diffusion, information regarding a light amount of regular reflected light, and information regarding a light amount in a periphery of a regular reflection direction, based on the reflected light distribution detected by the detection unit, and calculate an evaluation value regarding image clearness using the information indicating the degree of diffusion, the information regarding the light amount of the regular reflected light, and the information regarding the light amount in the periphery of the regular reflection direction.

## Description

### BACKGROUND OF THE INVENTION

### Field of the Invention

The present invention relates to a measurement device, a measurement method, and a non-transitory storage medium.

### Description of the Related Art

Measuring an appearance of an object has been an important proposition in the related art, and JIS and ISO have provided standards for measuring reflection characteristic of an object surface (test surface), such as gloss. Since persons determine a texture on the basis of how an object reflects, JIS Z 8741 and the like have been defined as standards for measuring specular glossiness (gloss values) indicating brightness of reflection, in other words, image brightness. ISO 13803, ASTM E 430, and the like have been defined as standards for measuring haze values indicating degrees of obscureness around reflected images (also referred to as unclearness of images). Further, JIS K 7374, JIS H 8686, and the like in Japan and internationally, ASTM E 430, ASTM D 5767, and the like have been defined as standards for measuring image clarity (image clearness) indicating how clear and sharp reflected images are. In addition, since matters that affect texture expression differ depending on the standards, observers (users) have to select optimal standards from the aforementioned standards in accordance with situations to measure reflection characteristic.

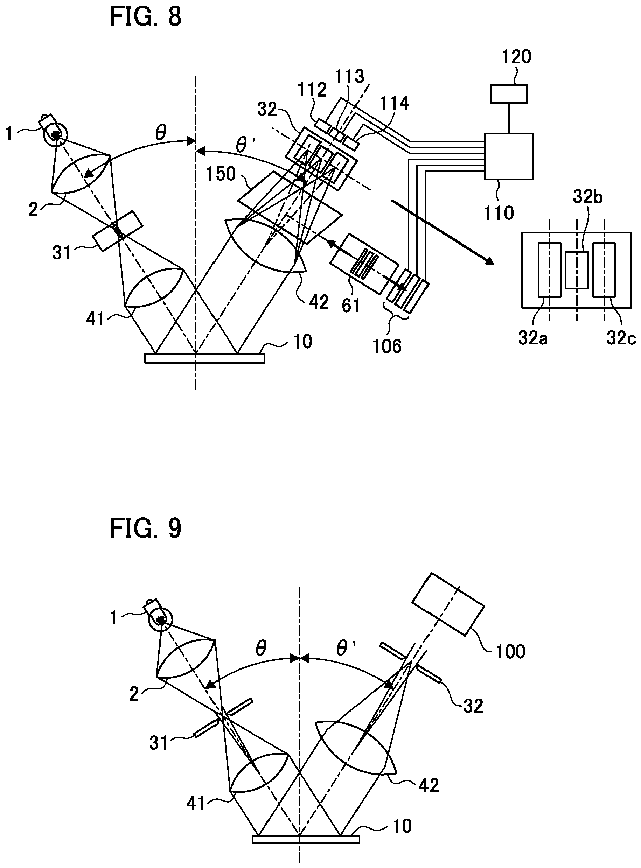

Fig. 9 illustrates a specular glossiness (gloss value) measurement method defined by JIS Z 8741. A light flux from a light source 1 is substantially collected onto a slit 31 by a lens 2, and a rectangular secondary light source with a prescribed opening angle is formed by the slit 31. A light flux from the slit 31 is formed to be a substantially parallel light flux by a lens 41, and a test surface 10 is irradiated with the lught flux. Light reflected by the test surface 10 has a unique reflection pattern depending on a state of the test surface 10 and is collected again by a lens 42, and an image of the slit 31 is formed on a light receiving slit 32. Light that has passed through the light receiving slit 32 is incident on a light receiving element 100 and is then output as a photoelectric signal from the light receiving element 100. The device for measuring specular glossiness in Fig. 9 calculates a gloss of the test surface 10 using a relative intensity of the amount of light reflected by the test surface 10 and the amount of light reflected by a reference surface that is measured in advance. The device for measuring specular glossiness in Fig. 9 defines a brightness of a reflected light source.

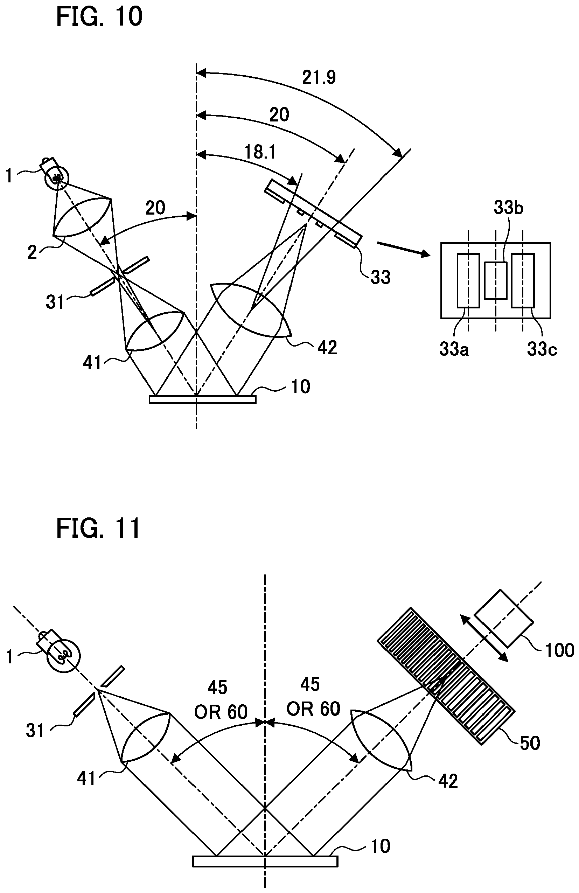

Fig. 10 illustrates a configuration of a device for measuring haze (value) defined by ASTM E 430. A light flux from the light source 1 is substantially collected by the lens 2 and is substantially collected onto the slit 31 set to have an opening angle defined by the standard, and a secondary light soruce with the defined opening angle is configured by the slit 31. A light flux from the slit 31 is formed into substantially parallel light by the lens 41, and the test surface 10 is irradiated with the lught flux. Light reflected by the test surface 10 has a unique reflection pattern depending on a state of the test surface 10 and is collected again by the lens 42, and the image of the slit 31 is formed on a light receiving slit 33. Light that has passed through the light receiving slit 33 is incident on each corresponding light receiving element and is then output as a photoelectric signal.

Fig. 11 illustrates a configuration of a device used in an image clarity test method defined by JIS K 7374. A light flux from the light source 1 becomes a secondary light source with a width defined by the standard at the slit 31, is incident on the lens 41, and is formed into substantially parallel light, and the test surface 10 is irradiated with the light flux. Light reflected by the test surface 10 has a unique reflection pattern depending on a state of the test surface 10 and is then collected again by the lens 42, and the image of the slit 31 is formed on a teeth slit 50. The teeth slit 50 is configured of five types of slits with different pitches, an arithmetic operation of a maximum transmitted light amount and a minimum transmitted light amount when the teeth slit 50 is caused to move in a slit alignment direction is performed, and a contrast value is obtained, thereby expressing states of the test surface 10 with five contrast values. Since a clearness of a reflected image is evaluated on the basis of a contrast in the method for measuring the image clarity, it is not possible to dispute the brightness of the reflected image.

Japanese Patent Laid-Open No. 2014-126408 discloses a measurement device capable of measuring a plurality of types of reflection characteristic of a test surface. Also, Japanese Patent Laid-Open No. 2016-211999 discloses a measurement device that is advantageous regarding an angular resolution of obtained optical properties.

Image clearness in an appearance changes depending on an illumination environment. If evaluation based on subjectivity of an observer (subjective evaluation) of the image clearness of a metallic coating is taken into consideration, for example, how the metallic coating looks differs between a case in which how clear the reflection of illumination light looks is evaluated and a case in which how clear the reflection of an object illuminated with the illumination light looks is evaluated. This is because there is a large difference in the luminance of an evaluation target even if the reflection of a glittering material corresponding to a background of the reflection is constant.

Specifically, although it is possible to ignore the influence of a glittering material due to the large difference in luminance in their reflection of illumination light, the visibility in subjective evaluation is degraded due to a decrease in or a reversal of the difference in luminance between the reflection of the target illuminated by the illumination light and the glittering material.

Since the device configurations of the measurement devices described in the aforementioned patent documents are uniquely determined, there is only one environment that can be reproduced, and there are cases in which correlations between measurement results and actual subjective evaluation are not satisfactory depending on measurement environments. Also, there are various scenes, such as a scene in which little blur is considered to be important and a scene in which contrast is considered to be important when persons determine image claraness, and it is necessary to change determination criteria depending on purposes of evaluation (purposes of measurement). However, it is difficult to change determination criteria according to the aforementioned measurement devices. Thus, there are cases in which correlations between measurement results and actual subjective evaluation are not satisfactory depending on purposes of evaluation.

### SUMMARY OF THE INVENTION

The present invention provides a measurement device that is advantageous for obtaining measurement results with satisfactory correlations with subjective evaluation, for example.

The present invention in its first aspect provides a measurement device as specified in claims 1 to 15. The present invention in its second aspect provides a measurement method as specified in claim 16.

Further features of the present invention will become apparent from the following description of exemplary embodiments with reference to the attached drawings.

### BRIEF DESCRIPTION OF THE DRAWINGS

Fig. 1 is a schematic configuration diagram of a measurement device according to a first embodiment.
Fig. 2 is a diagram illustrating a BRDF 1 and a BRDF 2 obtained by the measurement device according to the first embodiment.
Fig. 3 is a diagram illustrating an integrating region of light receiving elements for obtaining a gloss value according to the first embodiment.
Fig. 4 is a diagram illustrating an integrating region of a light receiving elements for obtaining a haze value H according to the first embodiment.
Fig. 5 is a flowchart illustrating an example of processing for outputting an image clearness evaluation value θ according to the first embodiment.
Fig. 6 is a diagram illustrating a region in which a regular reflection component G1 and regular reflection peripheral components H1 and H2 are calculated according to the first embodiment.
Fig. 7 is a schematic configuration diagram of a measurement device according to a second embodiment.
Fig. 8 is a schematic configuration diagram of a measurement device according to a third embodiment.
Fig. 9 is a configuration diagram of a specular glossiness measurement device designated by JIS Z 8741.
Fig. 10 is a configuration diagram of a haze value measurement device designated by ASTM E 430.
Fig. 11 is a configuration diagram of an image clarity measurement device designated by JIS K7374.

### DESCRIPTION OF THE EMBODIMENTS

Hereinafter, embodiments for carrying out the present invention will be described with reference to drawings and the like.

### (First embodiment)

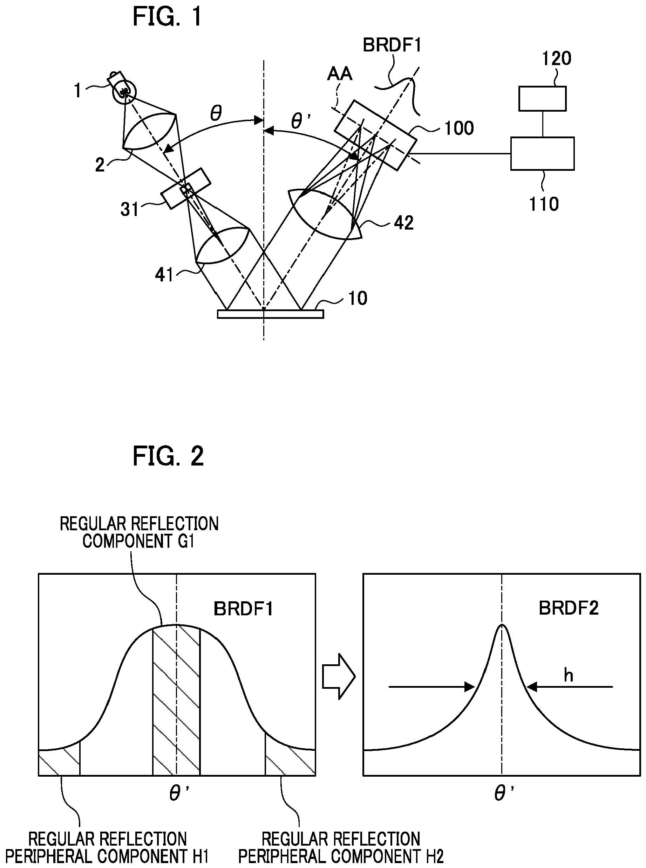

Fig. 1 is a diagram illustrating a schematic configuration of a measurement device configured to measure reflection characteristic of a test surface according to a first embodiment. An illumination unit from a light source 1 to a lens 41 and a light receiving unit from a lens 42 to a two-dimensional light receiving element (detection unit) 100 are disposed at angles θ and θ' relative to a vertical line of the test surface 10, respectively. The incident angle θ and the reflection angle θ' are set for each standard so as to follow each standard defining reflection characteristic of the test surface 10. The incident angle θ and the reflection angle θ' in a case of specular glossiness among the reflection characteristic are set to any of 20°, 45°, 60°, and 85°. The incident angle θ and the reflection angle θ' in a case of haze among the reflection characteristic are set to 20°. The incident angle θ and the reflection angle θ' in a case of image clarity among the reflection characteristic are set to either 45° or 60°. The incident angle θ and the reflection angle θ' in a case of DOI (Distinctness of Image) among the reflection characteristic are set to 20°.

A light flux emitted from the light source 1 is collected on an aperture diaphragm 31 with a rectangular aperture by a lens 2. An image of the light source 1 is temporarily formed on the aperture diaphragm 31 and becomes a rectangular secondary light source (surface light source). The shape of the aperture diaphragm 31 with the rectangular aperture is defined along with a focal distance of the lens 41 such that the opening angle defined by JIS Z8741 is obtained. A light flux emitted from the aperture diaphragm 31 becomes a spreading light flux again and is formed into substantially parallel light by the lens 41, and the test surface 10 is illuminated with the light. Reflected light from the test surface 10 has a unique reflection pattern (reflected light distribution) due to reflection characteristic of the test surface 10, becomes a collected flux of light due to the lens 42, and is then received by a light receiving surface of the light receiving element 100. Note that although the light receiving element 100 is a two-dimensional sensor as an example here, the light receiving element 100 may be a line sensor or the like.

The light receiving element 100 detects light intensity distribution formed on the light receiving surface by the reflected light from the test surface 10 illuminated by the illumination unit and outputs first data to a processing unit 110.

The first data is processed in a process, which will be described below, and a result is displayed by a display unit 120. The processing unit 110 and the display unit 120 may be configured in a measurement machine main body or may be configured in a connected computer.

Hereinafter, the process of the data processing will be described. Fig. 2 is a diagram illustrating reflection patterns BRDF 1 and BRDF 2 obtained by the measurement device according to the first embodiment. The first data is specifically a reflection pattern with an intensity changing in accordance with an angle and is a reflection pattern of the BRDF 1 illustrated in Fig. 2 when seen in an incident plane including an optical axis of an illumination optical system and an optical axis of a light receiving optical system. Note that the bidirectional reflectance distribution function (BRDF) is a function representing a reflectance distribution of the test surface 10 and represents a ratio of reflected light luminance with respect to incident light luminance. More strictly, the BRDF at a specific point on an object surface depends on both incident and reflection directions and is defined as a ratio of the intensity of reflected light in an observation direction with respect to the intensity of incident light from an illumination direction. A signal received by the light receiving element 100 can express reflection characteristic unique to the test surface 10 by cutting an output along an AA section on the light receiving element 100.

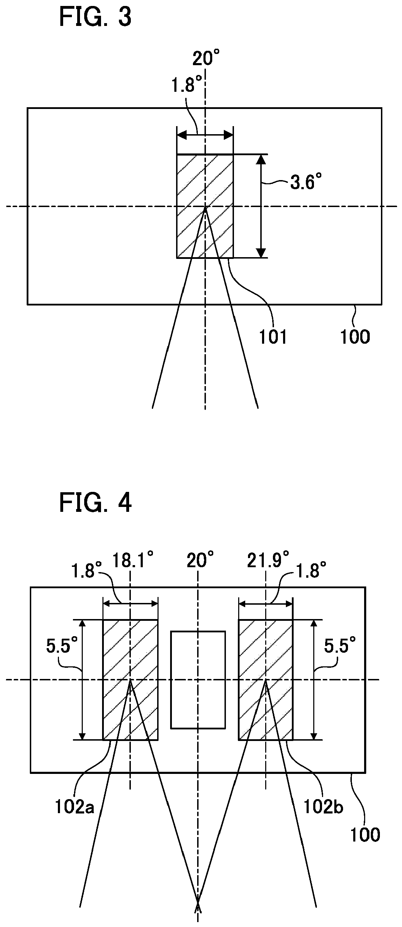

By cutting the intensity distribution of the reflected light received by the light receiving element 100, it is possible to address calculation based on each standard for defining reflection characteristic, for example. By cutting the intensity distribution of the reflected light along other sections in addition to cutting it along the AA section, it is also possible to measure anisotropy of reflection characteristic of the test surface 10. The reflection pattern BRDF 1 received by the light receiving element 100 includes a regular reflection component G1 and regular reflection peripheral components H1 and H2 as illustrated in Fig. 2. The light amount of the regular reflection component (regular reflected light) can represent a gloss value in a case of an integrated light amount in a region 101 in Fig. 3, and the light amount of the regular reflection peripheral components (the periphery of the regular reflection direction) can represent a haze value in a case of an integrated light amount in regions 102a and 102b in Fig. 4. It is also possible to state that the BRDF 1 is a reflected light distribution of light that has been incident from an arbitrary direction.

Here, since the BRDF 1 formed at the light receiving element 100 is a reflection pattern corresponding to the rectangular-shaped aperture diaphragm 31, the processing unit 110 converts the BRDF 1 into the BRDF 2 from a point light source illustrated in Fig. 2. In other words, the processing unit 110 obtains the BRDF 2 on the basis of the BRDF 1 detected by the light receiving element 100. As a conversion method into the BRDF 2 from the point light source, the estimation method based on prior measurement described in Japanese Patent Laid-Open No. 2014-126408 or the like can be exemplified. In addition, it is also possible to apply the method for calculating the BRDF by a deconvolution method including FFT and inverse FFT as described in Japanese Patent Laid-Open No. 2016-211999. The BRDF 2 is a simple Gaussian distribution pattern in which only a degree of widening and intensity change in the process of transition from the test surface 10 to a scattering surface, and here, the BRDF 2 is information indicating a degree of diffusion.

Also, for the reflection pattern BRDF 1 formed at the light receiving element 100, an optical system with an illumination angle of θ = 20°, for example, integrates outputs of a region 101 of 1.8° × 3.6° corresponding to an opening angle of a light receiver based on JIS Z8741 illustrated in Fig. 3. In this manner, a value corresponding to a gloss value Gs can be obtained. Further, outputs of the region 102a and the region 102b corresponding to 1.8° × 5.5° around the reflection angle θ' = 18.1° and the reflection angle θ' = 21.9°, respectively, corresponding to an opening angle of a light receiver assumed in ASTM E430 illustrated in Fig. 4 are integrated. In this manner, a haze value H can be obtained.

Image clearness in subjective evaluation of an observer can be determined by an observed blur of a reflected observation image, a contrast of the reflected image, and an image brightness, for example. The contrast of the reflected image and the image brightness change depending on an evaluation target and an environment. In addition, evaluation also changes depending on points that the observer who evaluates the image clearness considers important and also differs between a case in which how fine the image looks is considered to be important and a case in which contrast at the first sight is considered to be important.

In the embodiment, an image clearness evaluation value θ in consideration of subjective evaluation of the observer, in other words, an image clearness evaluation value θ that makes a correlation with the subjective evaluation of the observer satisfactory is calculated. The processing unit 110 calculates the image clearness evaluation value θ by the following process. First, a contrast value Ct corresponding to the contrast is calculated by Equation 1 below on the basis of the gloss value Gs and the haze value H. In the following equation, the area of the region 101 of the light receiving element for obtaining the gloss value Gs is represented as SG, and the area obtained by adding the region 102a to the region 102b of the light receiving element for obtaining the haze value H is represented as SH. $Ct = \left(Gs/SG-H/SH\times a\right) / \left(Gs/SG+H/SH\times a\right)$ equation 1
a is a coefficient used for weighting, and a weighting of a is set to be large in a case in which the amount of light that illuminates due to a haze generating factor such as a metallic flake is large, and a is set to be small in a case in which the light that shines on the target of reflection evaluation is brighter than the light that shines on a metallic flake. In this manner, it is possible to calculate the contrast value Ct in accordance with a state of illumination of the evaluation target. Note that in a case in which the coefficient a is 0 here, the haze value H may not be obtained since it is possible to calculate the contrast value Ct without using the haze value H.

The image clearness evaluation value θ can be calculated as Equation 2 below on the basis of the contrast value Ct calculated as described above. In Equation 2 below, a value corresponding to the width of the BRDF 2 as a numerical value corresponding to a blur of the reflected image, for example, the width of a half value is represented as h (width information), a gloss value corresponding to the image brightness is represented as Gs, a coefficient for contrast is represented as b, and a coefficient for image brightness is represented as c. $θ = h / \left({Ct}^{∧}b\right) / \left({Gs}^{∧}c\right)$ equation 2

Note that although the image clearness evaluation value θ is calculated here, the processing unit 110 may be caused to store a table including an image clearness evaluation value θ corresponding to each value, and the corresponding image clearness evaluation value θ may be obtained from the table, for example. In the specification, such obtention of the image clearness evaluation value θ is also referred to as calculation.

In a case in which image clearness of a surface of a metallic coating is evaluated in an environment in which multiple fluorescent lights are aligned on a ceiling as in an indoor office, the contrast is degraded due to diffuse reflection of a metallic flake. However, it is possible to reflect the degradation of image clearness due to the contrast factor in the calculated evaluation value by increasing the coefficient b of the contrast factor. Specifically, setting of the coefficient b for contrast from 0.5 to 1.5 and setting of the coefficient c for image brightness from 1 to 3 are suitable for evaluation of image clearness performed in an indoor office or the like such as with a metallic coating.

Also, in a case in which clearness of reflection of solar light is evaluated outdoors under sunlight, it is possible to express image clearness for a high-luminance single light source by setting the coefficient c for the contrast factor to be small and setting the coefficient b for the image brightness factor to be large. Specifically, it is only necessary to set the coefficient b for the contrast to be 0 to 0.5 and to set the coefficient c for the image brightness to be equal to or greater than 1.

In a case in which an environment other than these is assumed, it is possible to input various numerical values among numerical values from a negative region to a positive region of equal to or greater than 10 regardless of the numerical values of the aforementioned coefficients a and b. Therefore, it is possible to minimize such a disadvantage that a ranking of image clearness evaluation value θ becomes different from that in a case in which subjective evaluation is actually performed in an environment that is desired to be reproduced. Note that in a case in which the coefficient b is set to 0 here, it is not necessary to obtain the haze value H required to calculate the contrast value Ct since the image clearness evaluation value θ can be calculated without using the contrast value Ct. Further, in a case in which both the coefficients b and c are 0, it is not necessary to obtain the gloss value Gs since it is possible to calculate the image clearness evaluation value θ without using the contrast value Ct and the gloss value Gs.

However, since environments in which persons actually carry out activities and live are limited, a plurality of sets of combinations of coefficients used for weighting may be prepared such that one corresponding set can be selected from among the plurality of sets depending on a mode setting. As modes on the assumption of measurement environments such as an indoor environment and an outdoor environment, some modes such as an office mode in which the coefficient b is set to 1.5, an outdoor mode in which the coefficient b is set to 0, and a general house indoor mode in which the coefficient b is set to 0.75 may be prepared. Also, a plurality of sets of combinations of coefficients used for weighting may be prepared in consideration not only of the measurement environments but also of characteristics of the test surface and purposes of the measurement. Further, observers may be able to set arbitrary modes by adding sets of coefficients due to the processing unit 110 including a setting mechanism for setting additional sets of coefficients. Since it is thus possible to automatically determine the coefficients, it becomes easy for observers to set coefficients and thereby to perform measurement in accordance with situations.

Also, a difference in evaluation depending on viewpoints in subjective evaluation, in other words, a difference in evaluation due to a difference in purposes of measurement can be reflected in the image clearness evaluation value θ by setting the coefficients b and c as described below. In a case of an evaluation method based on how fine decomposed the reflected image looks, a correlation with subjective evaluation becomes more satisfactory as a contribution rate of h corresponding to the width of the BRDF 2 to the image clearness evaluation value θ increases. Therefore, it is preferable to set the coefficients b and c to be small, and if b and c are set to 0, for example, the image clearness evaluation value θ can be an evaluation value that is similar to that in simple resolution ability evaluation.

In order to obtain correspondence to an evaluation method in which contrast at first sight is considered to be important, it is only necessary to set the value of the coefficient b for the contrast to be large at this time. Specifically, the image clearness evaluation value θ can be an evaluation value that is similar to that in subjective evaluation in which contrast is considered to be important, by setting the coefficient b to a value of 1 to 3. Although exemplary numerical values are exemplified above, the coefficients may be other numerical values depending on environments and evaluation methods other than those described above.

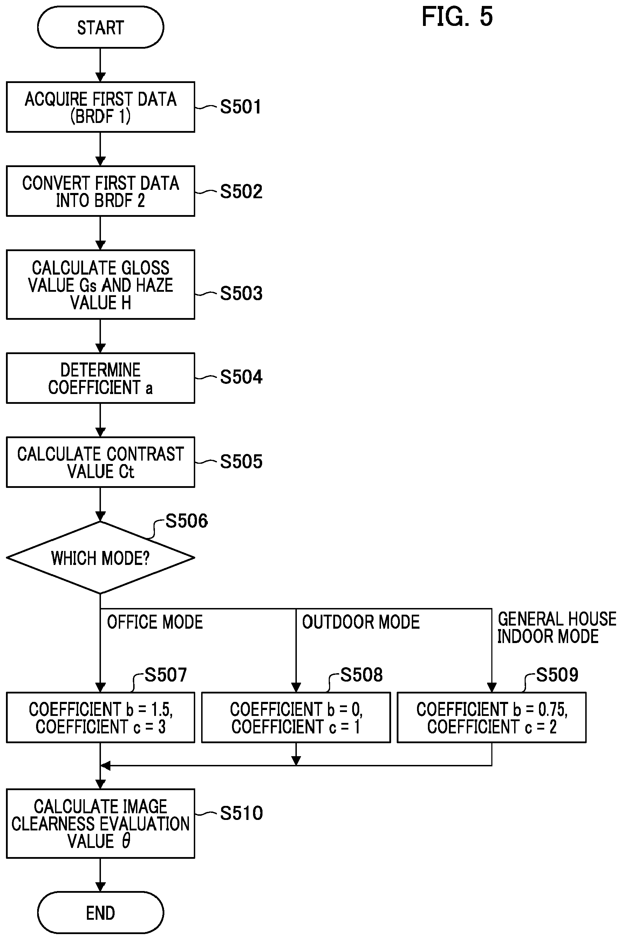

Here, processing for outputting the image clearness evaluation value θ will be described using Fig. 5. Fig. 5 is a flowchart illustrating an example of the processing for outputting the image clearness evaluation value θ according to the first embodiment. In the flow illustrated in the drawing, processing in a case in which an observer has set a mode will be described as an example. Note that each operation (step) illustrated in the drawing can be executed by the processing unit 110.

The processing unit 110 obtains the BRDF 1 as the first data from the light receiving element 100 (S501), converts the obtained BRDF 1 into the BRDF 2 through the aforementioned processing, and obtains the BRDF 2 as information indicating a degree of diffusion (S502). Next, the processing unit 110 calculates the gloss value Gs and the haze value H (S503). Thereafter, the processing unit 110 determines the coefficient a (S504) and calculates the contrast value Ct by Equation 1 described above using the coefficient a (S505).

Next, the processing unit 110 determines what mode has been set (S506). In a case in which the office mode has been set, the processing unit 110 sets the coefficient b to 1.5 and sets the coefficient c to 3 (S507). In a case in which the outdoor mode has been set, the processing unit 110 sets the coefficient b to 0 and sets the coefficient c to 1 (S508). In a case in which the general house indoor mode has been set, the processing unit 110 sets the coefficient b to 0.75 and sets the coefficient c to 2 (S509).

Thereafter, the processing unit 110 calculates the image clearness evaluation value θ using Equation 2 shown above using the set coefficient b and the coefficient c.

Note that these coefficients a, b, and c can also be determined using machine learning. Hereinafter, a procedure for the machine learning will be described. First, sample groups of assumed measurement cases, in other words, assumed test surfaces are prepared in advance. In a case in which measurement of coating orange peeling is assumed, for example, sample groups of coatings with different degrees of orange peeling are prepared, and gloss values Gs, haze values H, and widths h of the BRDF 2 are measured in advance by the measurement device. In regard to the prepared samples, it is desirable that test surfaces with various characteristics such as a plurality of metallic coatings that are considered to have haze values H and degradation of contrast at the time of subjective evaluation affected by scattering light and coatings with solid colors containing no metallic components, for example, be prepared. Subjective evaluation is performed on the sample groups in a desired environment to score them, and ranking in a descending order of image clearness is determined. This is defined as a measurement set, and coefficients a, b, and c such that the score of the subjective evaluation approaches the image clearness evaluation value θ are obtained using a steepest descent method or the like. If similar operations are performed on multiple sample groups, data sets necessary for the machine learning can be prepared. Relations of the gloss values Gs, the haze values H, the widths h of the BRDF 2, and the coefficients a, b, and c are extracted through regression processing of the machine learning using these data sets as teachers, and optimal a, b, and c in unknown data sets can thus be determined.

An order of glass values G, haze values H, widths of the BRDF, and subjective evaluation are successively input for samples of test surfaces with different characteristics, for example, sample groups of matte coatings, sample groups of films, and other samples in the same manner. Then, an algorithm that repeatedly learns the gloss values Gs, the haze values H, the width information of the BRDF, and optimal coefficients a, b, and c for the sample groups is installed in the processing unit 110. With such a configuration, it is also possible to obtain optimal coefficients a, b, and c in accordance with characteristics of the test surface. Also, if such an input mode in which observers can set coefficients through an input operation is installed, it is also possible to set optimal coefficients a, b, and c in accordance with a measurement environment in the process of the observers becoming used to using the measurement device. Further, modes in accordance with characteristics of the test surface such as an orange peeling mode and a matte coating mode, for example, may further be provided on the side of the device such that modes that are considered to be close those for measurement targets of the observers can be selected. In this manner, the image clearness clearness value θ can have a highly accurate result that is close to the desired subjective evaluation of an observer, and it is also possible to reliably determine appropriate coefficients depending on input modes.

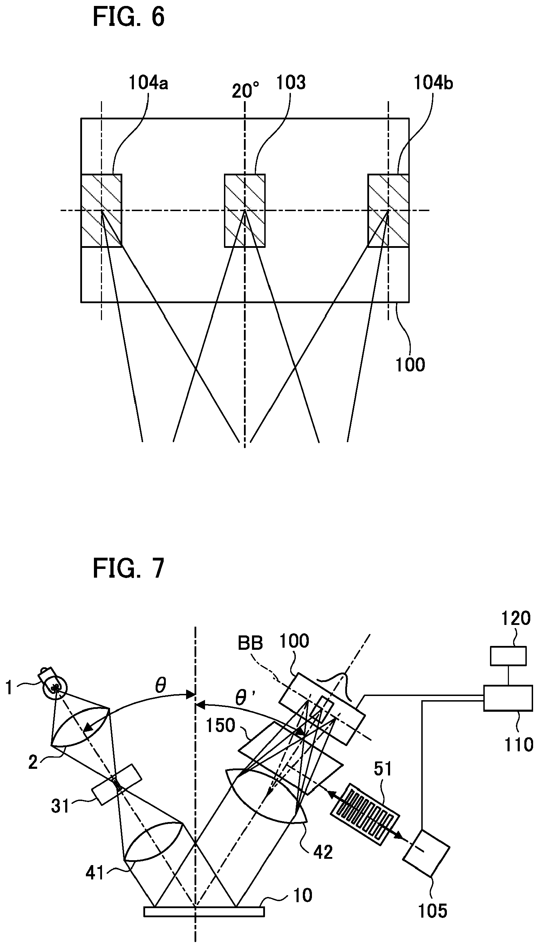

Note that although the gloss value Gs and the haze value H are used for the calculation of the contrast value Ct in the aforementioned example, it is also possible to calculate the contrast value Ct using the regular reflection component G1 and the regular reflection peripheral components H1 and H2 from the waveform of the BRDF 1. Light receiving regions of the regular reflection component G1 and the regular reflection peripheral components H1 and H2 are as illustrated in Fig. 6. A light receiving region 103 is a light receiving region of the regular reflection component G1. Light receiving regions 104a and 104b are light receiving regions of the regular reflection peripheral components H1 and H2. The contrast value Ct can be similarly calculated by Equation 3 on the assumption that the light receiving elements are represented as GS1, HS1, and HS2. $Ct = \left(G1/GS1-\left(H1+H2\right)/\left(HS1+HS2\right)\times a\right) / \left(G1/GS1+\left(H1+H2\right)/\left(HS1+HS2\right)\times a\right)$ equation 3

The image clearness evaluation value θ can be calculated as represented by Equation 4 using the obtained Ct value and the width h of the half value of the BRDF 2 as a numerical value corresponding to blur in the reflected image. $θ = h / \left({Ct}^{∧}t\right) / \left({G 1}^{∧}c\right)$ equation 4 The coefficients a, b, c used in Equations 3 and 4 above are as described above.

Since the image clearness evaluation value θ becomes a power of the contrast value Ct and the regular reflection component G1 depending on the coefficients, the order of magnitude of the numerical value varies greatly. In order to make this easy to use, if a logarithm is obtained as shown in Expression 5, a numerical value that is easy to use can also be obtained since it becomes unlikely for variation in the order of magnitude of the coefficient to occur. $θ = log 2 ( h / \left({Ct}^{∧}b\right) / \left({G 1}^{∧}c\right)$ equation 5

Although if width information of the BRDF 2 is used as a numerical value corresponding to blur of the reflected image, it is possible to directly represent a degree of blur of the reflected image, width information of the BRDF 1 may be used as blur information of the rectangular slit 31 to extract a difference corresponding to a change in degree of diffusion of the test object.

Also, although the half value width has been used as the width information, the present invention is not limited thereto and may employ a 1/3 value width, a 1/4 value width, or the like.

### (Second embodiment)

Fig. 7 is a diagram illustrating a schematic configuration of a measurement device configured to measure reflection characteristic of a test surface according to a second embodiment. In the embodiment, θ and θ' are set to 60° in the illumination optical system. Also, the configuration is partially different from that in the first embodiment, and the aperture diaphragm 31 has a slit shape with a width of 30 µm defined by JIS K 7374. A light flux with which the test surface 10 is irradiated from the lens 41 in the illumination optical system is then reflected by the test surface 10, forms a substantially collected light at the lens 42, and is received by a two-dimensional area sensor that serves as the light receiving element 100. Since the slit width of the aperture diaphragm 31 is as significantly thin as 30 µm, it is possible to deal it as the BRDF when distribution of the amount of light received in the two-dimensional area sensor is seen in a BB section.

Meanwhile, a part of the light turns back at the half mirror 150 and is then directed to the direction of a light receiving slit 51. The light receiving slit 51 is configured of five types of slits with different pitches defined by JIS K7374, and light that has passed through the aperture portion of the slit 51 is received by a light receiving element 105. In the embodiment, the light receiving element 100 and the light receiving element 105 serve as the detection unit. The processing unit 110 obtains an image clarity measurement value γ on the basis of the maximum transmitted light amount and the minimum transmitted light amount when the teeth slit 51 is caused to move in the slit alignment direction, in other words, the amount of reflected light from the test surface 10 detected by the light receiving element 105. Specifically, the processing unit 110 performs an arithmetic operation of the maximum transmitted light amount and the minimum transmitted light amount by the method defined by JIS K7374, and clearness of the reflected image in the test surface 10 is output as the image clarity measurement value γ. If the obtained image clarity measurement value γ is converted as information indicating the degree of diffusion by the following process, it is possible to deal it similarly to subjective evaluation in which conversion is carried out depending on an environment.

The contrast value Ct is obtained by Equation 3 similarly to the first embodiment. Also, the BRDF 2 is calculated from the light amount distribution BRDF 1 received by the light receiving element 100 similarly to the first embodiment, and the image clearness evaluation value θ can be calculated by Equation 6 below using the obtained Ct value and the regular reflection component G1 of the BRDF 1. $θ = γ / \left({Ct}^{∧}b\right) / \left({G 1}^{∧}c\right)$ equation 6 Note that the coefficients b and c used in Equation 6 above are as described above.

With the configuration as described above, it is also possible to simultaneously output the image clearness evaluation value that conforms to subjective evaluation at the same time with the obtention of the image clarity measurement method, which has been obtained in the related art. Also, it is needless to say that the image clearness evaluation value θ may be a logarithm in order to make occurrence of digit movement difficult, similarly to the first embodiment.

### (Third embodiment)

Fig. 8 illustrates a schematic configuration of a measurement device configured to measure reflection characteristic of a test surface according to a third embodiment. In the embodiment, only light in a defined region is selected by a light receiving-side diaphragm 32 via the lens 42 from reflected light from the test surface 10, and the selected light is received by light receiving elements 112, 113, and 114. The light receiving-side diaphragm 32 includes an aperture 32b configured to receive light in the regular reflection direction defined by JIS Z8741 specular glossiness method and ASTM E430 and apertures 32a and 32c configured to receive the amount of light in the periphery of regular reflection. A signal that can be received by the light receiving element 113 is output as the gloss value Gs, and a sum of signals that can be received by the light receiving elements 112 and 114 is output as the haze value H, to the processing unit 110. In the embodiment, the contrast value Ct is obtained similarly to Equation 1 described in the first embodiment.

Meanwhile, a light flux turning back at the half mirror 150 is received by a light receiving element 106 (line sensor) that has a light receiving region corresponding to each slit portion via a light receiving slit 61 defined by the DOI measurement method of ASTM E430. In the embodiment, the light receiving elements 112, 113, and 114 and the light receiving element 106 serve as the detection unit. An output signal from the light receiving element 106 is processed by the processing unit 110 and is then output as the DIO value D (DOI measurement value) defined by ASTM E430.

In the third embodiment, the image clearness evaluation value θ is calculated as Equation 7 using the DOI value D as information indicating the degree of diffusion. $θ = D / \left({Ct}^{∧}b\right) / \left({Gs}^{∧}c\right)$ equation 7 The coefficients b and c used in Equation 7 described above are as described above.

With the configuration as described above, it is possible to output the image clearness evaluation value that conforms to subjective evaluation at the same time with the obtention of the DOI value, the gloss value, and the haze value, which has been obtained in the related art. Also, it is needless to say that the image clearness evaluation value θ may be a logarithm in order to make occurrence of digit movement difficult, similarly to the first embodiment.

A light receiving slit 33 is configured of three slits 33a, 33b, and 33c, and the slits 33a to 33c are placed at 18.1°, 20°, and 21.9°, respectively with respect to the vertical line of the test surface 10. The slit 33b is used for measuring specular glossiness, and the slits 33a and 33c are used to measure the haze value. The haze value is an index indicating a degree of unclearness of the image. However, since angular differences of the slits 33a and 33c from the specular reflection light are small, the state of the test surface 10 suitable for measuring the haze value is limited. If the reflected image has such unclearness that the reflected image does not keep its original shape, it is difficult to obtain the haze value from the result of measurement performed by the measurement device in Fig. 7.

Although the DOI is measured using a device with a configuration that is similar to that of the device in Fig. 7, calculation equations of the dimensions and the values of slits differ. Specifically, angles of the slits 33a, 33b, and 33c with respect to the vertical line of the test surface 10 are 19.7°, 20°, and 20.3°, and sizes of the slits differ. It is difficult to obtain the DIO (value) of the test surface 10 that have unclearness due to which a reflected image does not keep its original shape, similarly to the measurement of the haze value and the like.

### (Other embodiments)

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

This application claims the benefit of Japanese Patent Application No. 2019-121611, filed June 28 2019, which is hereby incorporated by reference wherein in its entirety.

A measurement device configured to measure reflection characteristic of a test surface (10) includes: an illumination unit (1, 2, 31, 41) configured to illuminate the test surface with light from a light source (1); a detection unit (100, 105; 112,113,114,106) configured to detect reflected light distribution from the test surface illuminated by the illumination unit; and a processing unit (110) configured to obtain information indicating a degree of diffusion, information regarding a light amount of regular reflected light, and information regarding a light amount in a periphery of a regular reflection direction, based on the reflected light distribution detected by the detection unit, and calculate an evaluation value regarding image clearness using the information indicating the degree of diffusion, the information regarding the light amount of the regular reflected light, and the information regarding the light amount in the periphery of the regular reflection direction.

## Claims

1. A measurement device configured to measure reflection characteristic of a test surface (10), the measurement device comprising:
an illumination unit (1, 2, 31, 41) configured to illuminate the test surface with light from a light source (1);
a detection unit (100, 105; 112,113,114,106) configured to detect reflected light from the test surface illuminated by the illumination unit; and
a processing unit (110) configured to obtain information indicating a degree of diffusion, information regarding a light amount of regular reflected light, and information regarding a light amount in a periphery of a regular reflection direction, based on the reflected light detected by the detection unit, and calculate an evaluation value regarding image clearness using the information indicating the degree of diffusion, the information regarding the light amount of the regular reflected light, and the information regarding the light amount in the periphery of the regular reflection direction.

2. The measurement device according to claim 1,
wherein the detection unit detects a reflected light distribution from the test surface illuminated by the illumination unit, and
the processing unit obtains the information indicating the degree of diffusion based on the reflected light distribution detected by the detection unit.

3. The measurement device according to claim 1 or 2, wherein the detection unit includes a line sensor.

4. The measurement device according to claim 1 or 2, wherein the detection unit includes a two-dimensional sensor.

5. The measurement device according to any one of claims 1 to 4, wherein the information indicating the degree of diffusion includes width information of a waveform of a reflected light distribution of the received light or width information of a waveform of a BRDF.

6. The measurement device according to claim 1, wherein the information indicating the degree of diffusion includes an image clarity measurement value or a DOI measurement value.

7. The measurement device according to any one of claims 1 to 6, wherein the processing unit calculates at least one of the information of the light amount of the regular reflected light and the information regarding the light amount in the periphery of the regular reflection direction based on information regarding a BRDF obtained based on the reflected light from the test surface.

8. The measurement device according to any one of claims 1 to 7, wherein the information regarding the light amount of the regular reflected light includes a gloss value, and the information regarding the light amount in the periphery of the regular reflection direction includes a haze value.

9. The measurement device according to any one of claims 1 to 8, wherein the processing unit performs a weighting operation on the information indicating the degree of diffusion, the information regarding the light amount of the regular reflected light, and the information regarding the light amount in the periphery of the regular reflection direction to calculate a value corresponding to the image clearness.

10. The measurement device according to claim 9, wherein the processing unit performs the weighting by performing exponentiation of a contrast value and a numerical value including information regarding image brightness.

11. The measurement device according to claim 9 or 10, wherein the processing unit further converts the weighted value corresponding to the image clearness using a logarithm.

12. The measurement device according to any one of claims 9 to 11, wherein the processing unit sets a coefficient used for the weighting based on at least one of characteristics of the test surface, a measurement environment, and a purpose of measurement.

13. The measurement device according to any one of claims 9 to 12, wherein the processing unit prepares a plurality of sets of combinations of coefficients used for the weighting such that one corresponding set is able to be selected from among the plurality of sets depending on a mode setting.

14. The measurement device according to claim 13, wherein the mode includes at least one of an outdoor mode on an assumption of an outdoor environment and an indoor mode on an assumption of an indoor environment.

15. The measurement device according to claim 13 or 14, wherein the processing unit has a setting mechanism configured to additionally set a set of coefficients used for the weighting.

16. A measurement method for measuring reflection characteristic of a test surface, the method comprising:
detecting reflected light from the test surface illuminated by an illumination unit;
obtaining information indicating a degree of diffusion, information regarding a light amount of regular reflected light, and information regarding a light amount in a periphery of a regular reflection direction based on the detected reflected light; and
calculating an evaluation value regarding image clearness using the information indicating the degree of diffusion, the information regarding the light amount of the regular reflected light, and the information regarding the light amount in the periphery of the regular reflection direction.

17. A non-transitory storage medium on which is stored a computer program for making a computer execute the method according to claim 16.
